# EUROPEAN PATENT SPECIFICATION

(11) **EP 2 830 164 B1**
(45) Date of publication and mention of the grant of the patent: **04.08.2021**
(21) Application number: 13763715.3
(22) Date of filing: 19.03.2013
(51) Int. Cl.: H02G 3/12

(54) **BOX FOR ELECTRICAL EQUIPMENT**
KASTEN FÜR ELEKTRISCHE BAUTEILE
BOÎTIER POUR INSTALLATIONS ÉLECTRIQUES

(30) Priority: 19.03.2012 ES 201230301
(43) Date of publication of application: 28.01.2015
(73) Proprietor: Simon, S.A.U., 08013 Barcelona (ES)
(72) Inventor: MORET CODINA, Ma, Cristina, E-08021 Barcelona (ES)
(74) Representative: Balder IP Law, S.L.
(86) International application number: PCT/ES2013/000072
(87) International publication number: WO 2013/140004

(56) References cited:
- EP-A1- 1 895 631
- WO-A1-2006/094592
- DE-A1- 19 809 993
- GB-A- 820 911
- GB-A- 2 432 265
- US-A- 5 447 441
- US-A- 5 721 394
- US-A1- 2007 194 180
- None

## Description

### Object of the invention

The present invention refers to a recess-mounted wall box for electrical installations, and especially for hollow partition walls or raised flooring made of plasterboard panels, conglomerates or similar material.

### Field of application of the invention

The invention is applied in the area of electrical installations.

### Background of the invention

Boxes for electrical installations designed for recess-mounting in hollow partition walls or raised flooring and means of mounting or attachment to said wall using clamping claws acting between a front flange of the box and the outside face of said partition wall are well-known in the field. Two types of solution are used to insert the box in the hollow partition wall or raised flooring: the first, where both the screws and the clamping claws are metallic, and the second, where the screws are metallic but the clamping claws are plastic.

In the option where both clamping claws and screws are metallic, as in US5447441, there are two well-established problems: the first is that, due to the low coefficient of friction between screws and clamping claws, there is nothing to stop the clamping claws moving between the operative position (where they can act and exert pressure on the medium of the installation) and the inoperative position, where the clamping claws are withdrawn for the insertion or extraction of the box in the recess cavity without hindrance; the second problem is that vibrations and weak friction between screw and clamping claws can cause the loosening of said claws and the consequent movement of the said box.

In the second option, with metallic screws and plastic clamping claws, a greater coefficient of friction is achieved. The problem is that as the clamping claw is plastic, its tightening power is much weaker than that of a metallic claw and, furthermore, with the passing of time and vibrations, the phenomenon of creeping may appear in the plastic, with the resulting loss of strength of exertion of the clamping claw on the installation medium, and the consequent movement of the box. DE19809993 shows a partial solution, where the screw is covered in a polyamide coating.

Therefore, the technical problem to be resolved is the development of a recess-mounted box for electrical installations, mountable in hollow partition walls and raised flooring of the type described above, which has metallic screws and clamping claws, with characteristics which guarantee the control of the switching of the clamping claws between the operative and inoperative positions due to the turning of their respective screws in one or other direction, further guaranteeing a correct mounting or attachment of the box in its recess, ease of use and avoiding the loosening of the clamping claws due to vibration of the medium where it is installed.

A box according to the invention is disclosed in claim 1.

### Description of the invention

The recess-mounted box for electrical installations in hollow partition walls or raised flooring, object of the invention, is of the type described above, with the advantage of controlling the movement of the clamping claw in the mounting or attachment system, just as in the solution where the screws are metallic but the claws are plastic; and the clamping strength of the metallic claw, just as in the solution where the screws and the claws are metallic; and, finally, avoiding the loosening of the clamping claws from the medium of installation due to vibrations of the medium where the recess-mounted box is installed.

To resolve the problems explained above, the metallic screws have at least in one section of their length a coating which exerts, in contact with the corresponding metallic claw, sufficient locking torque to control the turning of the claw between operative and inoperative positions during the turning of the screw in one direction or another, maintaining the advantages of the pressure of the metallic claw and in addition avoiding the loosening of the claw due to vibrations of the medium where the recess-mounted box is installed.

The number and length of said sections may be variable, according to the depth of the box, the thickness of the medium of installation and the length of the clamping screws, and, furthermore, it is not necessary to apply the coating to the whole of the length of the thread, as, to control the clamping claws, it is sufficient to coat part of the thread.

An example of said coating may comprise a film of polyamide or any other appropriate material that provides sufficient locking torque to control the movement of the clamping claws together with the corresponding screws and their anti-vibration effect.

### Description of the figures

To complement the current description and to facilitate the understanding of the characteristics of the invention, attached to the document is an illustrative and non limiting set of drawings in which the following is represented:
- Figure 1: shows a perspective view of an embodiment of the recess-mounted box for electrical installations, according to the invention, with metallic clamping claws and their respective clamping screws in unmounted position;
- Figure 2: shows a partial elevated view of the box from the previous figure mounted in an orifice of a separation wall, in which one of the claws mounted on the front flange of the corresponding clamping screw can be seen in its initial inoperative position, i.e. turned toward the lateral cavity of the corresponding longitudinal passage;
- Figure 3: shows a view similar to figure 2, where the metallic clamping claw has moved to the operative position due to the turning of the screw in the clamping direction, with the aid of a first coating applied to the section of screw nearest its tip;
- Figure 4: shows a view similar to figure. 2 and figure 3, where the clamping claw in operative position acting against the inside surface of the partition wall and in the moment of initiating the turning of the screw toward the clamping claw's release position; and
- Figure 5: shows a view similar to figure 4, where the clamping claw has been drawn to an inoperative position due to the turning of the screw in the loosening direction, with the collaboration of a second coating applied to the second section of the screw next to the screw head.

### Preferred embodiment of the invention

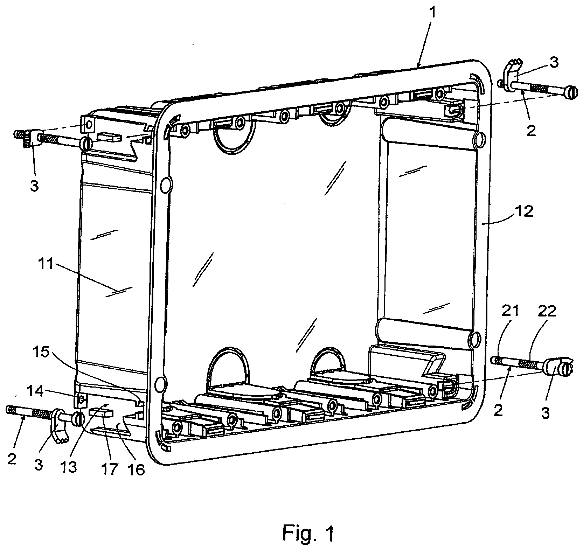

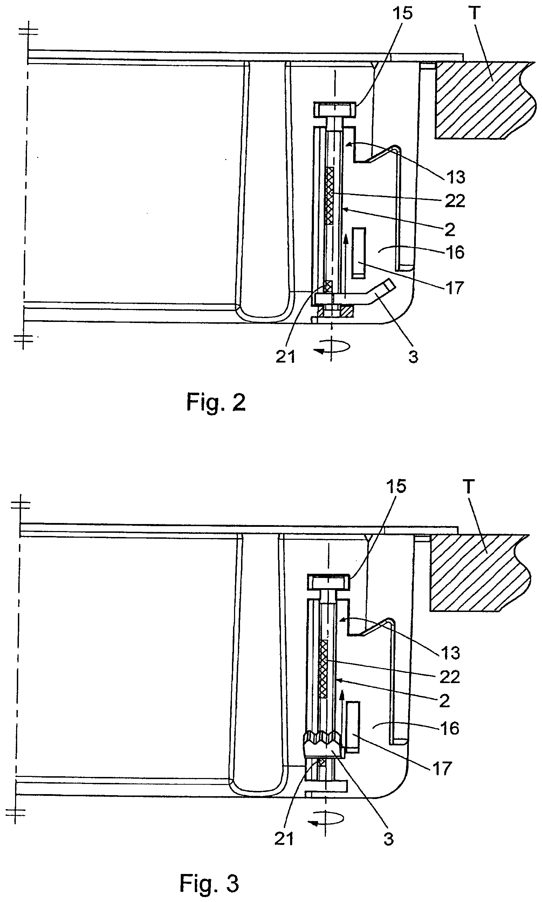

Figure 1 shows a perspective view of an embodiment of the recess-mounted box (1), in this case in a prism-shaped configuration with an open front and whose lateral walls (11) are topped at its front end by a frontal flange (12) which functions as a stop against the outside surface of the hollow partition wall (T), (see figure 2), once the box (1) has been mounted in an orifice made in said partition wall (T).

The lateral walls (11) of the box (1) have several indentations joined at their ends, one longitudinal channel (13) in a lateral cavity (16); and separated in the central area by a separation wall (17).

The longitudinal channel (13) also has some seats (14) and (15) at its ends for mounting which allow the metallic screws (2) to turn. The said screws are acted on through the frontal area of the box (1), and each has a clamping claw (3) mounted on it with the purpose of pressing against the rear surface of the partition wall (T) where the box (1) is mounted.

Each of the screws (2) has a first coating (21) on a first section next to its tip, and a second coating (22) on a second section, nearer the head of the screw (2). The uncoated section of the screw (2) between the two coatings (21, 22), where there is no control of the turning of the clamping claw (3), once situated on the seats (14) and (15) of the longitudinal channel (13), coincides with a separation wall (17) which keeps the clamping claw (3) in an operative state and stops it from withdrawing to its inoperative state.

This separation wall (17) also gives rise to a saving in coating material (21, 22) to be applied to the screw (2).

In the example shown the coating material (21, 22) consists of a film of polyamide, although any other material with similar properties could be used and only coating half the thread in said sections.

The length and placement of the screw coatings (21, 22) of the screws (2) has been studied so that when the clamping claws (3) press against the rear face of a standard partition wall (T), it does so within the coated area (21, 22), and so takes advantage of the anti-vibration effect of the coatings to avoid a future loosening of the clamping claws (3) due to vibration in the wall (T) where the installation is mounted.

Once the box (1) has been mounted in the orifice of the partition wall (T), as can be observed in figures 2 and 3, when the screw (2) is turned in the clamping direction, the clamping claw (3), initially in the inoperative position at the bottom of the longitudinal channel (13) and the lateral cavity (16), as represented in figure 2, it turns together with the screw (2) due to the action of the first coating (21), moving into the operative position represented in figure 3.

As the screw (2) is tightened, the clamping claw (3) is displaced vertically along the longitudinal channel (13), leaving the coated area (21). Vertical displacement of the clamping claw (3), is maintained because the separation wall (27) impedes further turning of the clamping claw (3), and does not allow the clamping claw (3), to move into the inoperative position, until pressure is established on the partition wall (7).

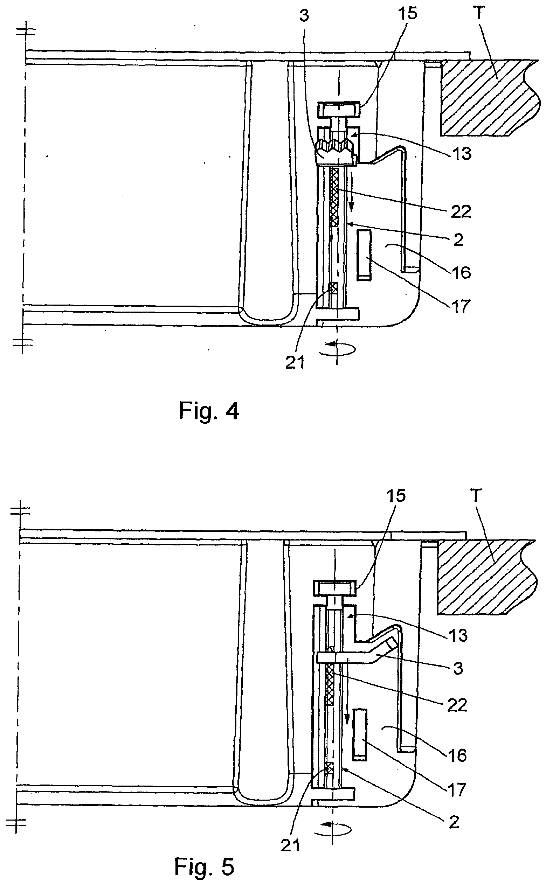

To extract the box it is necessary to turn the screws (2) in the opposite direction to the clamping direction, as shown in figure 4. Thus, the respective clamping claw (3) progressively separates from the partition wall (T), and the said clamping claw (3) turns to its inoperative position at the end of the junction between the longitudinal channel (13) and the lateral cavity (16). As shown in figure 5, drawn by the second coating (22), the clamping claw (3) turns jointly with the screw (2).

## Claims

1. Box for electrical installations (1) of recess-mounted type, installed by means of an attaching system of metallic clamping claws (3) and metallic screws (2) of the box (1) in hollow walls or raised flooring, **characterized in that** the metallic screws (2) of the metallic clamping claws (3) have, in at least one section of their length, a coating (21, 22); and **in that** the box (1) further comprises both longitudinal passages (13) and corresponding lateral cavities (16) that allow to turn a respective claw (3).

2. Box for electrical installations (1) according to claim 1, **characterized in that** each of the screws (2) has a second coating (22) on a second section that is near the screw head.

3. Box for electrical installations (1) according to claims 1 to 2, **characterized in that** the coating material provides a blocking torque for the metallic clamping claw (3) with respect to its own screw.

4. Box for electrical installations (1) according to claim 3, **characterized in that** the coating (21, 22) material is polyamide.

## Patentansprüche

1. Kasten für Elektroeinbauinstallationen (1), die mittels eines Befestigungssystems aus metallischen Spannklauen (3) und metallischer Schrauben (2) des Kastens (1) in Hohlwänden oder Doppelböden installiert werden, **dadurch gekennzeichnet, dass** die metallischen Schrauben (2) der metallischen Spannklauen (3) in wenigstens einem Abschnitt ihrer Länge eine Beschichtung (21, 22) haben; und dass der Kasten (1) ferner sowohl Längsdurchgänge (13) als auch entsprechende seitliche Hohlräume (16) hat, die ermöglichen, dass eine jeweilige Klaue (3) gedreht wird.

2. Kasten für Elektroinstallationen (1) nach Anspruch 1, **dadurch gekennzeichnet, dass** jede der Schrauben (2) eine zweite Beschichtung (22) auf einem zweiten Abschnitt, der in der Nähe des Schraubenkopfs ist, hat.

3. Kasten für Elektroinstallationen (1) nach den Ansprüchen 1 bis 2, **dadurch gekennzeichnet, dass** das Beschichtungsmaterial ein Sperrdrehmoment für die metallische Spannklaue (3) in Bezug auf ihre eigene Schraube bereitstellt.

4. Kasten für Elektroinstallationen (1) nach Anspruch 3, **dadurch gekennzeichnet, dass** das Beschichtungsmaterial (21, 22) Polyamid ist.

## Revendications

1. Boîtier pour installations électriques (1) de type encastré, installé au moyen d'un système de fixation de griffes de serrage métalliques (3) et de vis métalliques (2) du boîtier (1) dans des parois creuses ou un plancher surélevé, **caractérisé en ce que** les vis métalliques (2) des griffes de serrage métalliques (3) ont, dans au moins une section de leur longueur, un revêtement (21, 22) ; et **en ce que** le boîtier (1) comprend en outre à la fois des passages longitudinaux (13) et des cavités latérales (16) correspondantes qui permettent de faire tourner une griffe (3) respective.

2. Boîtier pour installations électriques (1) selon la revendication 1, **caractérisé en ce que** chacune des vis (2) a un second revêtement (22) sur une seconde section qui est à proximité de la tête de vis.

3. Boîtier pour installations électriques (1) selon les revendications 1 à 2, **caractérisé en ce que** le matériau de revêtement fournit un couple de blocage pour la griffe de serrage métallique (3) par rapport à sa propre vis.

4. Boîtier pour installations électriques (1) selon la revendication 3, **caractérisé en ce que** le matériau de revêtement (21, 22) est de la polyamide.
